# EUROPEAN PATENT APPLICATION

(11) **EP 4 462 759 A1**
(43) Date of publication of application: **13.11.2024**
(21) Application number: 23172717.3
(22) Date of filing: 11.05.2023
(51) Int. Cl.: H04L 69/40, H04L 67/141, H04L 67/142, H04L 67/145, H04L 67/146, H04L 67/2876, H04L 9/40

(54) **SYSTEM AND METHOD FOR MAINTAINING A COMMUNICATION LINK BETWEEN NODES DURING THE EXECUTION OF A COMMAND**

(71) Applicant: BULL SAS, 78340 Les Clayes-Sous-Bois (FR)
(72) Inventor: DERR, Simon, 38600 FONTAINE (FR)
(74) Representative: Cabinet Camus Lebkiri

(57) **Abstract**

The invention relates to a system (2) comprising at least one originating node (H1) and at least one receiving node (H2) wherein:
- The originating node (H1) comprises a client (C2) configured to:
- launch a proxy server program (PS1) on the receiving node (H2)
- transmit a command from the SSH client (S1) to the proxy server (PS1),

- The receiving node (H2) comprises a server program (S2) between the proxy (PS1) and the SSH server (S2) configured to:
- receive the command transmitted by the client (C2),
- transmit the command to the SSH server (S1),

- The client (C2) and the server (S2) are configured to:
- store data to be exchanged and detect a loss of connection between the originating node (H1) and the receiving node (H2),
- when detecting a loss of connection, launch, by the client program, a new proxy server (PS2) on the receiving node (H2) configured to connect to the server (S2) using the same session identifier as before.

## Description

### TECHNICAL FIELD

The technical field of the invention is the field of network communications.

The present document concerns a system and method for maintaining a communication link between two nodes during the execution, by one of the two nodes, of a command initiated by the other node.

### STATE OF THE ART

To run a command on a remote host from a local host, it is known to use protocols such as SSH ("Secure Shell"), RSH ("Remote Shell") or telnet which are able to set up a connection over a network between the local and the remote host, to allow command input/output streams between the local and the remote host. These protocols permit to access a shell of the remote host from the local host. A shell is a computer program that gives access to an operating system's services to an operator or to other computer programs.

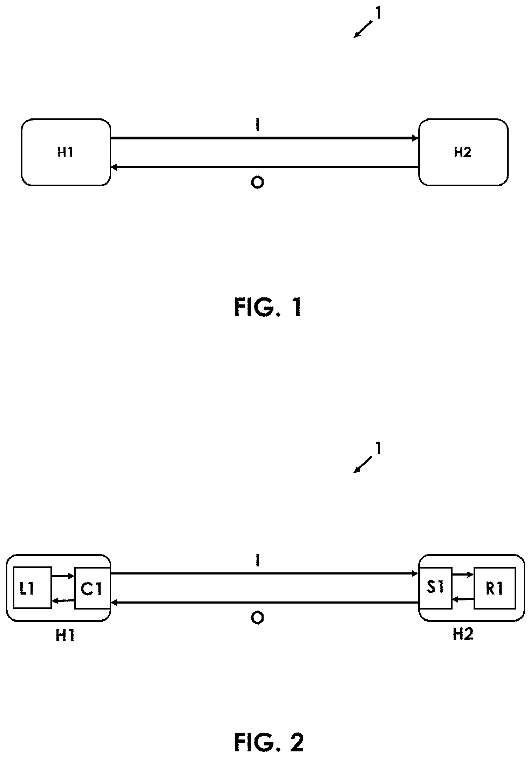

Such a connection is shown at Figure 1, which represents a system comprising two nodes, connected using a connection protocol, for example SSH. One of the two nodes, H1, is called a "local host", to be understood as a node from which originates a command, also called an originating node. The other of the two nodes, H2, is called a "remote host", to be understood as a node to which is destined the command, also called a receiving node. The nodes are devices or computer programs executed by devices, which can communicate using a network, such as a wired or a wireless network.

As represented in Figure 2, a local program L1 of a local host H1 sends a command, such as an SSH command, to a remote host H2. The command comprises the name of a remote program R1 to be executed by the remote host H2. Then, an input/output stream is set up, the input/output stream being used to send inputs I from the local host H1 to the remote host H2, and to receive outputs O sent by the remote host H2 to the local host H1. When the remote host H2 executes the remote program R1 requested in the command, such as an SSH command, it executes a computer program R1 corresponding to what is requested in the command. The inputs I comprise input data for the remote program R1 executed in response to the command and the outputs O comprise output data sent by the remote program R1 to the local program L1.

To set up this input/output stream, most connection protocols such as SSH use a client program C1 on the originating node, the client C1 being a computer program, and a server program S1 on the receiving node, the server program S1 being another computer program. The client C1 authenticates to the server S1, and C1 and S1 can then exchange data, resulting in the local program L1 and the remote program R1 being able to exchange data using the input/output I/O streams.

An issue arises if the network between the two nodes H1 and H2 experiences connection issues or if the network experiences a change. The protocols SSH, RSH and telnet are not made to maintain the connection between the two nodes H1 and H2 in such a case. In such a case, the connection between the two nodes is lost, the execution of the command is stopped, which can lead to data loss, and another instance of the input/output stream has to be set up. With the example of SSH, a new connection has to be set up, using a new client C1 and a new server S1.

A known alternative to SSH able to manage roaming and intermittent connections is MOSH ("Mobile Shell"). The problem is that MOSH does not give access to the input/output streams of the remotely executed command; it is only able to provide a view of the current output of the command, without guaranteeing the integrity of the exchanges between the nodes, which is not satisfactory for some use cases. Besides, MOSH uses a non-standard UDP ("User Datagram Protocol") protocol, which is different from the SSH protocol. Therefore, using MOSH, a special server has to be launched.

Another solution could be to use a VPN ("Virtual Private Network") between the two nodes, but a VPN is cumbersome to setup and usually requires special administrative permissions.

To address the drawbacks mentioned before, there is a need for a solution which guarantees no data loss between two nodes connected using SSH or an equivalent protocol, even in case of network issues.

### SUMMARY OF THE INVENTION

The present invention solves the above-mentioned problems by providing a solution guaranteeing no data loss between two nodes connected using a protocol such as SSH.

According to a first aspect of the invention, this is satisfied by providing a system comprising at least one originating node and at least one receiving node wherein:
- the originating node comprises a first client program configured to send at least one command comprising input data, the input data of the command comprising at least one action to be performed by the receiving node,
- the receiving node comprises a first server program configured to receive the input data of the command and to instruct the receiving node to perform the action comprised in the input data, the performing of the action resulting in obtaining output data of the command,
- the system being characterized in that:
- The originating node comprises a second client program between the first client program and the receiving node configured to:
   - launch a proxy server program on the receiving node and
   - transmit the input data of the command received from the first client program to the proxy server program on the receiving node and the output data of the command received from the proxy server program to the first client program,
- The receiving node comprises a second server program between the launched proxy server program and the first server program configured to:
   - receive the input data of the command transmitted by the second client program, via the launched proxy server program, and the output data of the command received from the first server program,
- transmit the input data of the command to the first server program and the output data of the command to the second client via the proxy server,
- The second client program and the second server program communicate using a communication channel and a session identifier, and are configured to:
   - store data related to the command to be exchanged between the first client program and the first server program,
   - detect a loss of connection between the originating node and the receiving node,
   - when detecting a loss of connection between the originating node and the receiving node, launch, by the second client program, a new proxy server program on the receiving node, the new proxy server program being configured to connect to the second server program using the session identifier.

Thanks to the invention, a set of tools is interposed between the local client and the remote host. The set of tools encapsulates the data flows and transparently reconnects in case of network failure to solve connection issues which could arise between the two nodes. To do so, the system according to the invention monitors the network connection between the nodes and, when it detects a loss of connection, the system according to the invention is configured to launch a new proxy server program on the receiving node, which will connect to an already existing second server program which runs throughout the execution of the original command. The proxy server program connects to the second server program using a unique session identifier generated at the launching of the execution of the command by a client program according to the invention on the originating node. Thus, the connection is restored and the exchanges between the nodes can be carried out normally.

Furthermore, compared to the prior art, and in particular compared to MOSH, the invention permits to access the input/output streams of the remotely executed command. In addition, the invention is compatible with SSH and therefore does not need a modified SSH client.

The system according to the invention may also have one or more of the following characteristics, considered individually or according to any technically possible combinations thereof:
- the second client program and the second server program are configured to store data to be exchanged between the originating node and the receiving node by each comprising a circular data buffer.
- the first client program is an SSH client, the first server program is an SSH server and the command is an SSH command.
- the second client program and the second server program communicate using the SSH protocol.
- the loss of connection is detected by the second client program sending a ping message to the second server program and not receiving an acknowledgement message for a predetermined duration following the sending of the ping message.
- the data to be exchanged between the originating node and the receiving node is stored only during the detection of the loss of connection.
- the new proxy server program is configured to connect to the second server program using a UNIX socket with the unique session identifier.
- the launched proxy server program is automatically terminated when the new proxy server program is launched.

Another aspect of the invention relates to a method implemented by the originating node of the system according to the invention, comprising:
- executing the second client program on the originating node in response to a command,
- generating by the second client program a unique session identifier,
- sending an execute command to execute the proxy server program on the receiving node,
- sending the unique session identifier to the proxy server program,
- transmitting the input data of the command received from the first client program to the proxy server program.

Another aspect of the invention relates to a method implemented by the receiving node of the system according to the invention, comprising:
- executing the proxy server program on the receiving node in response to an execute command sent by the second client program,
- receiving the unique session identifier sent by the second client program,
- setting up the second server with the unique session identifier and connecting the proxy server to the second server using the unique session identifier,
- transmitting, by the proxy server program, the input data of the command received from the second client program to the second server program,
- transmitting, by the second server program, the input data of the command received from the proxy server to the first server program.

Another aspect of the invention relates to a method implemented by the originating node of the system according to the invention, comprising:
- receiving, by the second client program on the originating node output data of the command originating from the first server program and transmitted by the first proxy server,
- transmitting, by the second client C2, the output data of the command received from the first proxy server program to the first client program.

Another aspect of the invention relates to a method implemented by the receiving node of the system according to the invention, comprising:
- obtaining, by the first server program, output data of the command to be transmitted to the first client program,
- sending, by the first server program, the output data of the command to the second client program,
- transmitting, by the second server program, via the first proxy server, the output data of the command to the second client program of the originating node.

Another aspect of the invention relates to a computer program product comprising instructions to cause the originating node of the system of the invention to execute the steps of the method implemented by the originating node.

Another aspect of the invention relates to a computer program product comprising instructions to cause the receiving node of the system of the invention to execute the steps of the method implemented by the receiving node.

Another aspect of the invention relates to a computer-readable medium having stored thereon any one of the computer program products of the invention.

The invention finds a particular interest when performing software tests using Jenkins^{®}, when the tests are automatised and the software to be tested is implemented by a distant machine.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a known system comprising two nodes,
- Figure 2 is a schematic representation of a known system comprising two nodes using SSH,
- Figure 3 is a schematic representation of a system according to the invention,
- Figure 4 is a schematic representation of an embodiment of the system according to the invention,
- Figure 5 is a schematic representation of the system according to the invention after the network connection has been restored,
- Figures 6 and 8 are schematic representations of methods implemented by the originating node of the system according to the invention,
- Figures 7 and 9 are schematic representations of methods implemented by the receiving node of the system according to the invention.

### DETAILED DESCRIPTION

For greater clarity, identical or similar elements are marked by identical reference signs in all of the figures.

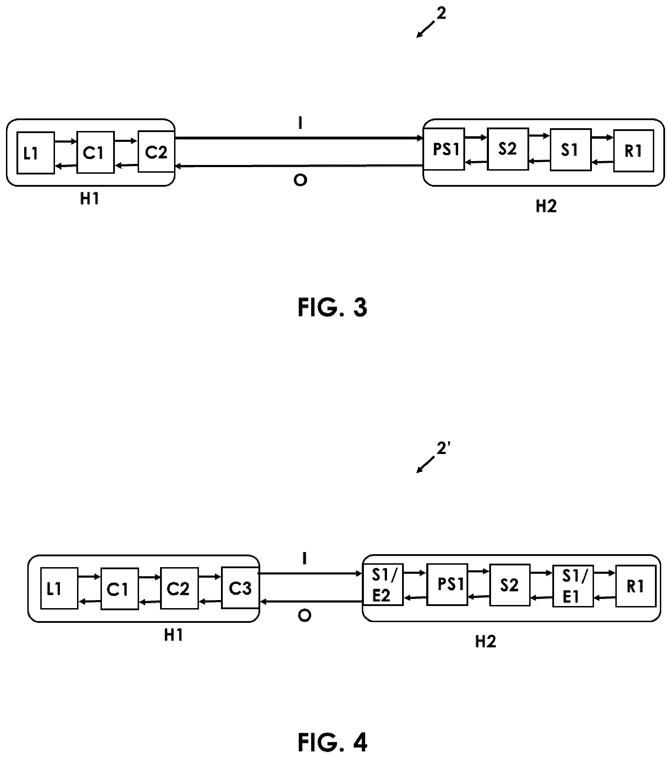

Figure 3 is a schematic representation of a system 2 according to the invention.

The system comprises an originating node H1 and a receiving node H2.

The originating node H1 is called "originating" as it is the sender of a command. The command is destined to the receiving node H2, which is called "receiving" as it is the recipient of the command.

The nodes H1 and H2 are devices such as computers, servers, smartphones, tablets, or any other type of device which comprises a memory and a processor. Alternatively, the nodes H1 and H2 can be computer programs implemented by a device. As an example, the nodes H1 and H2 can be implemented by the same computer.

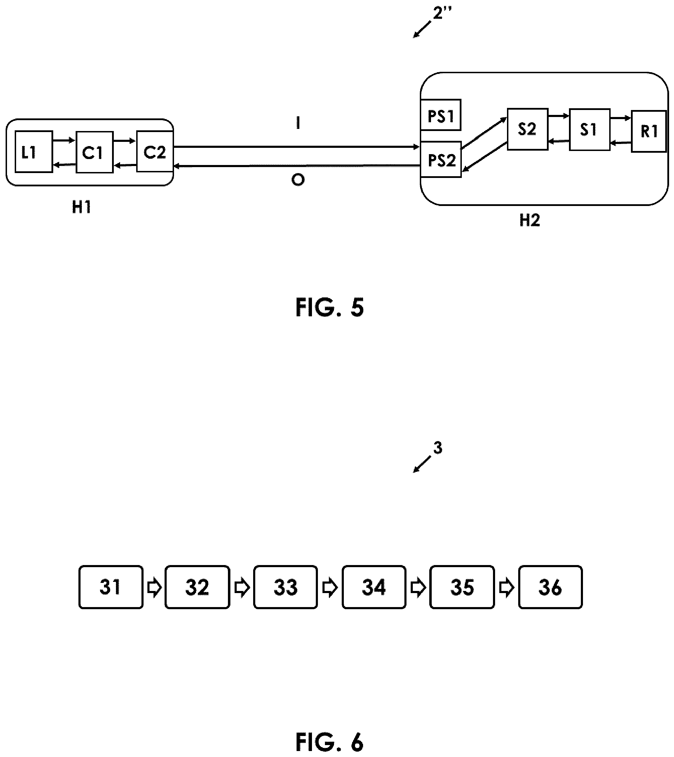

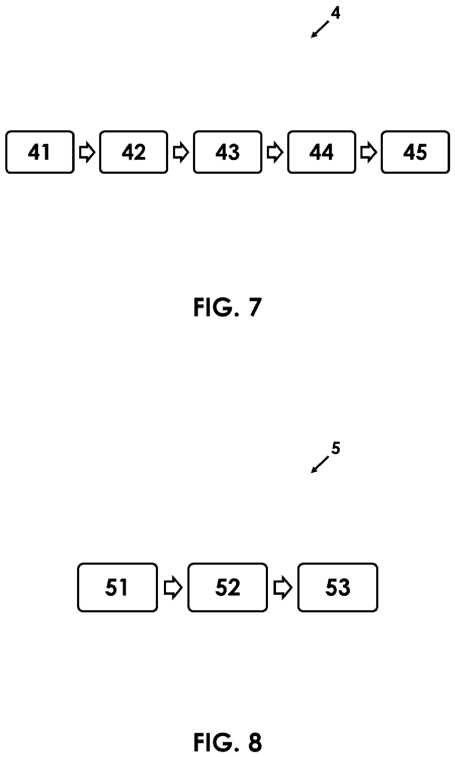

The originating node H1 of the system 2 implements a method 3 which is represented at Figure 6. The receiving node H2 of the system 2 implements a method 4 which is represented at Figure 7. It is to be understood by "a node implements the method" the fact that the node comprises a processor and a memory, the memory storing instructions which, when executed by the processor, cause the node to carry out said method.

The command sent by the originating node H1 to the receiving node H2 is for example an SSH command, or an RSH command. The command is meant to:
- connect the two nodes H1 and H2 and
- for the receiving node H2 to perform an action based on inputs comprised in the command or based on the command itself.

The originating node H1 comprises a "local" computer program L1 and a "remote" computer program R1 implemented on the receiving node H2. These computer programs need to communicate. The computer programs L1 and R1 are for example instances of Jenkins^{®} respectively master and slave programs, or any other programs for example for performing software testing. To do so, the local computer program L1 sets up a first client program C1 on the originating node H1 and a first server program S1 on the receiving node H2 using the SSH or RSH protocol. The SSH or RSH protocols comprise the sending of an SSH or RSH command, and the setting up of the first client C1 in response to the command. The first client C1 and the first server S1 are for example SSH or RSH client and server.

In the present description, "server" and "server program" will be used interchangeably to refer to the same object: a computer program executed by a node which provides the services of a server. In the present description, "client" and "client program" will be used interchangeably to refer to the same object: a computer program executed by a node which performs the actions of a client.

The invention adds a set of tools between the first client C1 and the first server S1. This set of tools comprises:
- a second client program C2 executed by the originating node H1,
- a proxy server PS1 executed by the receiving node H2,
- a second server program S2 executed by the receiving node H2.

The second client C2 is launched following the setting up of the first client C1, before the first client C1 connects to the first server S1.

The second client C2 is located between the first client C1 and the receiving node H2. This is to be understood as: any data sent by the receiving node H2, to be received by the first client C1 and related to the command passes through the second client C2, and any data sent by the first client C1, to be received by the receiving node H2 and related to the command passes through the second client C2, as represented at Figure 3.

The second client C2 is further configured to:
- launch a proxy server program PS1 on the receiving node H2 and
- transmit any piece of data related to the command exchanged between the first client C1 and the proxy server PS1. It is understood by "data related to the command" one or several input or output piece(s) of data sent by the local program L1 or by the remote program R1 or by any entity in between related to the exchange of data between the local program L1 and the remote program R1, when the remote program R1 has been launched or performs an action executed in response to the command or to input data comprised in the command. In other words, the second client C2 is configured to transmit the input data of the command received from the first client program C1 to the proxy server program PS1 on the receiving node H2 and the output data of the command received from the proxy server program PS1 to the first client program C1.

The second server S2 is located between the launched proxy server PS1 and the first server S1. This is to be understood as: any data sent by the originating node H1, including the command, to be received by the first server S1 and related to the command passes through the second server S2, and any data sent by the launched proxy server PS1 to be received by the originating node H1 and related to the command passes through the second server S2 as represented at Figure 3.

The second server S2 is configured to:
- receive input data of the command transmitted by the second client C2, via the launched proxy server PS1, and transmit said input data to the first server S1,
- receive output data of the command transmitted by the first server S1, and transmit said output data to the proxy server PS1.

The setting up of the system 2 according to the invention comprises performing the steps of the two methods 3 and 4. The method 3 comprises the steps carried out by the originating node H1 and the method 4 comprises the steps carried out by the receiving node H2.

First, the command is initiated at a step 31 of the method 3 by the local program L1 of the originating node H1, for example by an operator using the local program L1 of the originating node H1, by the local program L1 of the originating node H1 itself or by another computer. The command is for example an SSH command comprising input data requesting the launch of the remote program R1 on the receiving node H2 or requesting an action be performed by the receiving node H2. The performing of said action by the remote program R1 or the launching of the remote program R1 results in obtaining output data of the command, the output data comprising for example a result of the action, for example a result of a test, a value of at least one metric of the remote program R1 during the action, or any piece of data linked to the performing of the action comprised in the input data of the command. The output data can be obtained, received, or generated.

At a step 32 of the method 3, in response to the initiation of the command, the originating node H1 sets up the second client C2 at a step 32 of the method 3. The setting up can comprise launching an executable program which comprises instructions which, when executed, results in carrying out the actions of the client C2 which will be described later in this description.

At a step 33 of the method 3, the second client C2 generates a unique session identifier. This generation is for example a random generation.

At a step 34 of the method 3, the second client C2 sends an execute command to execute the proxy server PS1 on the receiving node H2. The execute command is predetermined in the second client C2 and the receiving node H2 stores an executable program which, when executed, results in carrying out the actions of the proxy server PS1 which will be described later in this description. The sending of said execute command can use an SSH connection specific to this execution, as described later and in Figure 4.

At a step 41 of the method 4, the proxy server PS1 is executed on the receiving node H2 in response to the execute command sent by the second client C2.

Following the execution of the proxy server PS1 by the receiving node H2, at a step 35 of the method 3, the second client C2 sends the unique session identifier to the proxy server PS1.

The unique session identifier sent by the second client C2 is received by the proxy server PS1 at a step 42 of the method 4 and is used to set up the second server S2 and to connect to the second server S2 at a step 43, the setting up of the second server S2 and connection to the second server S2 being for example performed using a UNIX socket with the unique session identifier as socket identifier. It is important that the second server S2 has knowledge of the unique session identifier, for the second server S2 to know which session it has to manage.

At a step 35 of the method 3, the second client C2 transmits the input data of the command received from the first client C1 to the proxy server PS1. Said input data comprised in the command initiated at the step 31 comprise a request to launch the remote program R1 on the receiving node H2, to request an action be performed by the remote program R1 or any input data to be processed by the remote program R1 on the receiving node H2 if the remote program R1 is already launched.

At a step 44 of the method 4, the proxy server PS1 transmits the input data of the command received from the second client C2 to the second server S2. The second server program S2 transmits the input data of the command received from the proxy server PS1 to the first server S1 at a step 45 of the method 4 and the input data of the command is treated by the first server S1 as in the state of the art. That is, the first server S1 requests the receiving node H2 to perform the action comprised in the input data of the command, for example launching the remote program R1 or requesting the remote program R1 to perform an action. Another difference between the invention and the state of the art lies in transmitting the data related to the command back from the first server S1 to the first client C1, which has to be transmitted through the set of tools added by the invention between the two entities.

When the setting up has already been performed, the sending of any piece of data related to the command from the local program L1 of the originating node H1 to the remote program R1 of the receiving node H2 is performed by carrying out the following steps:
- The sending of the piece(s) of data related to the command is initiated by the originating node H1,
- the piece(s) of data related to the command is transmitted by the first client C1 to the second client C2,
- the piece(s) of data related to the command is transmitted by the second client C2 to the proxy server PS1,
- the piece(s) of data related to the command is transmitted by the proxy server PS1 to the second server S2,
- the piece(s) of data related to the command is transmitted by the second server S2 to the first server S1.

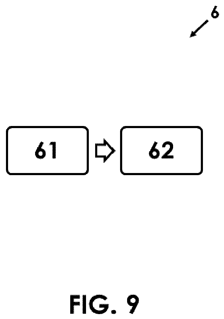

Any output data of the command to be sent by the first server S1 to the first client C1 follows the inverse path, as shown on Figure 3 and on Figures 8 and 9.

Figure 8 shows a schematic representation of a method 5 of transmitting output data of the command by the receiving node H2 to the originating node H1.

The method 5 comprises three steps:
- A first step 51 of obtaining, by the first server program S1, output data of the command to be transmitted to the first client program C1. The obtention 51 of output data can comprise, for the first server program S1, generating output data, receiving output data, or acquiring output data from the remote program R1.
- A second step 52 of sending, by the first server program S1, the output data of the command obtained at the step 51 to the second client program S2,
- A third step 53 of transmitting, by the second server program S2, via the first proxy server PS1, the output data of the command to the second client program C2 of the originating node H1.

Figure 9 shows a schematic representation of a method 6 of receiving output data of the command by the originating node H1 sent from the receiving node H2.

The method 6 comprises two steps:
- A first step 61 of receiving, by the second client program C2 on the originating node H1, the output data of the command originating from the first server program S1 and transmitted by the first proxy server PS1 at the step 53 of the method 5,
- A second step 62 of transmitting, by the second client program C2, the output data of the command received from the first proxy server program PS1 to the first client program C1.

The setting up of the second server S2 at step 42 and the connection of the proxy server PS1 to the second server S2 at step 43 preferably comprises using a local socket.

The second client C2 is configured to launch the proxy server PS1 on the receiving node H2 by using a communication channel, for example a communication channel set up using SSH. In such a case, a third client C3 has to be set up, as shown in Figure 4. The third client C3 is an SSH client configured to communicate with the first server S1, the first server S1 being an SSH server. In this embodiment, SSH is also used between the originating node H1 and the destination node H2, that is, the first client C1 is an SSH client and the first server S1 is an SSH server. The second client C2 is not an SSH client and the second server S2 is not an SSH server. With the first server S1 being an SSH server, the first server S1 comprises two different components: a first component configured to wait on the receiving node H2 for requests for connection to arrive, and a second component "E", launched when the first component has received a new request for connection. The second component is specific to the new connection request and there can be several second "E" components for the same SSH server. In the present embodiment, represented in Figure 4, there are two second components: E1 and E2. The component E2 is configured to handle the connection with the third client C3, and the component E1 is configured to communicate with the first client C1, connected via the whole chain from the second client C2 to the second server S2.The proxy server PS1 can therefore be launched, by the second client C2, using SSH, by setting up a specific SSH connection using the same first server S1 as the one used by the first client C1, but using a different component of said server.

The second client C2 and the second server S2 are configured to store the data related to the command to be exchanged between the first client C1 and the first server S1. To do so, they can comprise a buffer, for example a circular buffer, which stores every piece of data before it is sent to the other entity. That is, the second client C2 stores in its buffer all data destined to the second server S2 before it is sent to the second server S2 and the second server S2 stores in its buffer all data destined to the second client C2 before it is sent to the second client C2. The buffer, when it is circular, has a capacity large enough to store at least all data to be sent for a predetermined duration, for example all data to be sent in 10 seconds. When the circular buffer is full, that is when it stores enough data to fill its maximum length, the first data to have been stored is overwritten. This storing of data can be performed using other types of storage. The storage of data to be exchanged permits to restore the exchanges where they were left in case of loss of connection between the two nodes H1 and H2.

The second client C2 and the second server S2 are configured to detect a loss of connection between the originating node H1 and the receiving node H2. This detection of loss of connection is for example performed using a ping message sent by the second client C2 to the second server S2 and an acknowledgement sent in response to the ping message by the second server S2 to the second client C2. The ping message can also be sent by the second server S2 and the acknowledgement by the second client S2. A loss of connection is detected when no acknowledgement is received for a predetermined duration, for example for the 10 seconds following the sending of the ping message. When a loss of connection between the second client C2 and the second server S2 is detected, a loss of connection between the originating node H1 and the receiving node H2 is detected.

The second client C2 is configured to launch a new proxy server program PS2 on the receiving node H2 when detecting a loss of connection between the originating node H1 and the receiving node H2. The new proxy server PS2 is configured to connect to the second server S2 using the unique session identifier generated at step 32 and transmitted to the second server S2 at steps 42 and 43. When connecting the new proxy server PS2 to the already existing second server S2, the unique session identifier is used by the new proxy server PS2 so that the new proxy server PS2 knows how to reach the second server S2. For example, a UNIX socket can be used with the unique session identifier as the identifier of the socket. This launch of a new proxy server PS2 permits to restore the connection between the first client C1 and the first server S1 when a loss of connection has occurred between the originating node H1 and the receiving node H2. When the new proxy server PS2 is set up, the data related to the command to be exchanged stored by the second client C2 which has not been sent because of the loss of connection is sent to the second server S2. Similarly, the data related to the command to be exchanged stored by the second server S2 which has not been sent because of the loss of connection is sent to the second client C2.

When setting up the new proxy server PS2, or when it has been set up, a situation as represented in Figure 5 can arise, where two proxy servers PS1 and PS2 coexist. The new proxy server PS2 is connected to the second server S2. In an embodiment, each proxy server PS1 is configured to detect the presence of a new proxy server PS2 and to self-terminate. This way, only the newer proxy server PS2 is kept alive. The invention covers every way to keep alive only the newest proxy server PS2 on the receiving node H2. For example, a way to self-terminate the older proxy server PS1 is to configure the first proxy server PS1 to self-terminate when it detects that the network connection with the second client C2 is lost. If the first proxy server PS1 does not detect a network connection loss with the second client C2, the second server S2 can be configured to terminate its connection with the first proxy server PS1 when a new proxy server PS2 connects to the second server S2. The first proxy server PS1 has to be configured to self-terminate also when it detects that its connection with the second server S2 is lost.

In an alternative, only the data to be exchanged during a loss of connection detected is stored, as opposed to the first embodiment wherein data to be exchanged is always stored, and eventually erased if overwritten.

## Claims

1. System (2) comprising at least one originating node (H1) and at least one receiving node (H2) wherein:
- the originating node (H1) comprises a first client program (C1) configured to send at least one command comprising input data, the input data of the command comprising at least one action to be performed by the receiving node (H2),
- the receiving node (H2) comprises a first server program (S1) configured to receive the input data of the command and to instruct the receiving node (H2) to perform the action comprised in the input data, the performing of the action resulting in obtaining output data of the command,
the system (2) being **characterized in that**:
- The originating node (H1) comprises a second client program (C2) between the first client program (C1) and the receiving node (H2) configured to:
∘ launch a proxy server program (PS1) on the receiving node (H2) and
∘ transmit the input data of the command received from the first client program (C1) to the proxy server program (PS1) on the receiving node (H2) and the output data of the command received from the proxy server program (PS1) to the first client program (C1),
- The receiving node (H2) comprises a second server program (S2) between the launched proxy server program (PS1) and the first server program (S1) configured to:
∘ receive the input data of the command transmitted by the second client program (C2), via the launched proxy server program (PS1), and the output data of the command received from the first server program (S1),
∘ transmit the input data of the command to the first server program (S1) and the output data of the command to the second client program (C2) via the proxy server program (PS1),
- The second client program (C2) and the second server program (S2) communicate using a communication channel and a session identifier, and are configured to:
∘ store data related to the command to be exchanged between the first client program (C1) and the first server program (S1),
∘ detect a loss of connection between the originating node (H1) and the receiving node (H2),
o when detecting a loss of connection between the originating node (H1) and the receiving node (H2), launch, by the second client program (C2), a new proxy server program (PS2) on the receiving node (H2), the new proxy server program (PS2) being configured to connect to the second server program (S2) using the session identifier.

2. System (2) according to claim 1 wherein the second client program (C2) and the second server program (S2) are configured to store data to be exchanged between the originating node (H1) and the receiving node (H2) by each comprising a circular data buffer.

3. System (2) according to any one of the preceding claims wherein the first client program (C1) is an SSH client, the first server program (S1) is an SSH server, and the command is an SSH command.

4. System (2) according to any one of the preceding claims wherein the second client program (C2) and the second server program (S2) communicate using the SSH protocol.

5. System (2) according to any one of the preceding claims wherein the loss of connection is detected by the second client program (C2) sending a ping message to the second server program (S2) and not receiving an acknowledgement message for a predetermined duration following the sending of the ping message.

6. System (2) according to any one of the preceding claims wherein the data to be exchanged between the originating node (H1) and the receiving node (H2) is stored only during the detection of the loss of connection.

7. System (2) according to any one of the preceding claims wherein the new proxy server program (PS2) is configured to connect to the second server program (S2) using a UNIX socket with the unique session identifier.

8. System (2) according to any one of the preceding claims wherein the launched proxy server program (PS1) is automatically terminated when the new proxy server program (PS2) is launched.

9. Method (3) implemented by the originating node (H1) of the system (2) according to any one of the preceding claims, comprising:
- executing (32) the second client program (C2) on the originating node (H1) in response to a command,
- generating (33) by the second client program (C2) a unique session identifier,
- sending (34) an execute command to execute the proxy server program (PS1) on the receiving node (H2),
- sending (35) the unique session identifier to the proxy server program (PS1),
- transmitting (36) the input data of the command received from the first client program (C1) to the proxy server program (PS1).

10. Method (4) implemented by the receiving node (H2) of the system (2) according to any one of claims 1 to 8, comprising:
- executing (41) the proxy server program (PS1) on the receiving node (H2) in response to an execute command sent by the second client program (C2),
- receiving (42) the unique session identifier sent by the second client program (C2),
- setting up (43) the second server program (S2) with the unique session identifier and connecting the proxy server program (PS1) to the second server program (S2) using the unique session identifier,
- transmitting (44), by the proxy server program (PS1), the input data of the command received from the second client program (C2) to the second server program (S2),
- transmitting (45), by the second server program (S2), the input data of the command received from the proxy server program (PS1) to the first server program (S1).

11. Method (3) implemented by the originating node (H1) of the system (2) according to any one of claims 1 to 8, comprising:
- receiving, by the second client program (C2) on the originating node (H1) output data of the command originating from the first server program (S1) and transmitted by the first proxy server (PS1),
- transmitting, by the second client program (C2), the output data of the command received from the first proxy server program (PS1) to the first client program (C1).

12. Method (4) implemented by the receiving node (H2) of the system (2) according to any one of claims 1 to 8, comprising:
- obtaining, by the first server program (S1), output data of the command to be transmitted to the first client program (C1),
- sending, by the first server program (S1), the output data of the command to the second client program (S2),
- transmitting, by the second server program (S2), via the first proxy server (PS1), the output data of the command to the second client program (C2) of the originating node (H1).

13. A computer program product comprising instructions to cause the originating node (H1) of the system (2) of any one of claims 1 to 8 to execute the steps of the method (3) of claim 9 or of the method of claim 11.

14. A computer program product comprising instructions to cause the receiving node (H2) of the system (2) of any one of claims 1 to 8 to execute the steps of the method (4) of claim 10 or of the method of claim 12.

15. A computer-readable medium having stored thereon the computer program product of claim 13 or the computer program product of claim 14.
